(19) Europäisches Patentamt / European Patent Office / Office européen des brevets

(11) **EP 4 139 188 B1**

(12) **EUROPÄISCHE PATENTSCHRIFT**

(45) Veröffentlichungstag und Bekanntmachung des Hinweises auf die Patenterteilung:
**06.08.2025 Patentblatt 2025/32**

(21) Anmeldenummer: **21720206.8**

(22) Anmeldetag: **15.04.2021**

(51) Internationale Patentklassifikation (IPC):
**G01L 5/22** *(2006.01)*      **B62D 6/10** *(2006.01)*
**B62D 5/04** *(2006.01)*

(52) Gemeinsame Patentklassifikation (CPC):
**B62D 6/10; G01L 5/221;** B62D 5/049

(86) Internationale Anmeldenummer:
**PCT/EP2021/059786**

(87) Internationale Veröffentlichungsnummer:
**WO 2021/213890 (28.10.2021 Gazette 2021/43)**

(54) **VERFAHREN ZUR BESTIMMUNG VON HYSTERESE UND OFFSET EINER LENKSÄULENDREHMOMENTBESTIMMUNG**

METHOD FOR DETERMINING HYSTERESIS AND OFFSET OF A STEERING-COLUMN TORQUE DETERMINATION PROCESS

PROCÉDÉ POUR DÉTERMINER L'HYSTÉRÉSIS ET LE DÉCALAGE D'UN PROCESSUS DE DÉTERMINATION DE COUPLE DE COLONNE DE DIRECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.04.2020 DE 102020110847**

(43) Veröffentlichungstag der Anmeldung:
**01.03.2023 Patentblatt 2023/09**

(73) Patentinhaber:
• **thyssenkrupp Presta AG**
  **9492 Eschen (LI)**
• **thyssenkrupp AG**
  **45143 Essen (DE)**

(72) Erfinder:
• **KAKAS, Peter**
  **1118 Budapest (HU)**
• **MESTER, Ákos**
  **1114 Budapest (HU)**
• **MULLER, Mark**
  **1114 Budapest (HU)**
• **VARGA, Àdám**
  **1118 Budapest (HU)**

(74) Vertreter: **thyssenkrupp Intellectual Property GmbH**
**ThyssenKrupp Allee 1**
**45143 Essen (DE)**

(56) Entgegenhaltungen:
CN-A- 1 907 786      DE-A1- 102017 200 713
DE-C1- 10 034 135    DE-C1- 19 755 044
JP-A- 2008 061 326

## Beschreibung

Die vorliegende Erfindung betrifft ein Verfahren zur Bestimmung von Hysterese und Offset einer Lenksäulendrehmomentbestimmung mit den Merkmalen des Oberbegriffs des Anspruchs 1 und eine elektromechanische Hilfskraftlenkung für ein Kraftfahrzeug, die ein solches Verfahren ausführen kann.

Elektromechanische Servolenkungen unterstützen die vom Fahrer aufgebrachte Lenkkraft. Die Lenkkraft, die der Fahrer übers Lenkrad vorgibt, wird in einen Torsionsstab geleitet, der sich kraftabhängig verdreht. Dieses Drehmoment misst ein Sensor einer Lenksäulendrehmomentsensoreinheit, der diese Information an ein elektronisches Steuergerät weiterreicht. Das wiederum gibt dem elektrischen Servomotor präzise Befehle, welches Zusatzdrehmoment in die Lenkung eingeleitet werden soll.

Da die Drehmomentsensoreinheit (TSU) nicht unmittelbar am Lenkrad sitzt, führen Reibung und Asymmetrien in dem Lenksystem, die hauptsächlich durch die Lenksäule, Kardangelenke und die Drehmomentsensoreinheit selbst hervorgerufen werden, dazu, dass die Bestimmung des Drehmomentes fehlerbehaftet ist.

Um eine höhere Genauigkeit bei der Ermittlung des Drehmomentes einer von einem Fahrer betätigten Lenkhandhabe zu ermöglichen, sieht die DE 100 34 135 C1 vor, durch zeitlich wiederkehrende Drehmomente- und/oder Winkelmessungen im Betrieb einer elektrischen Kraftfahrzeuglenkung auftretende Offsets und Nichtlinearitäten der Drehmomentsensoren zu korrigieren. Dazu werden entsprechende Korrekturen bei bekannten Drehmomentzuständen ohne eine Drehmomentaufbringung seitens des Fahrers statistisch ausgewertet und eine Mittelwertbildung durchgeführt.

Es ist Aufgabe der vorliegenden Erfindung ein Verfahren zur Bestimmung von Hysterese und Offset einer Lenksäulendrehmomentbestimmung anzugeben, das die Genauigkeit der Drehmomentmessung verbessert.

Diese Aufgabe wird von einem Verfahren zur Bestimmung von Hysterese und Offset einer Lenksäulendrehmomentbestimmung einer Drehmomentsensoreinheit mit den Merkmalen des Anspruchs 1 und von einer elektromechanischen Hilfskraftlenkung für ein Kraftfahrzeug, die dazu ausgelegt ist, ein solches Verfahren auszuführen gelöst. Vorteilhafte Weiterbildungen ergeben sich aus den Unteransprüchen.

Demnach ist ein Verfahren zur Bestimmung von Hysterese und Offset der Lenksäulendrehmomentbestimmung einer elektromechanischen Hilfskraftlenkung eines Kraftfahrzeuges vorgesehen, das folgende Schritte umfasst:

- Messen oder schätzen eines in ein Lenkrad eingeleiteten Drehmomentes mittels einer Lenksäulendrehmomentsensoreinheit,

- Eintragen von unter bestimmten Bedingungen gemessener oder geschätzter Drehmomentwerte in ein Histogramm,

- Analyse und statistische Auswertung des Histogramms und Bestimmen der Hysterese und des Offsets in Form eines Hysteresewertes und eines Offsetwertes.

Durch Auswertung der Messwerte kann so kostengünstig die Drehmomentbestimmung verbessert werden. Die Bestimmung erfolgt vorzugsweise durch Messung eines in ein Lenkrad eingeleiteten Drehmomentes mittels einer Lenksäulendrehmomentsensoreinheit.

Vorzugsweise umfassen die Bedingungen das gemessene Drehmoment, einen Lenkwinkel, eine tiefpassgefilterte Lenkwinkelgeschwindigkeit und eine Kraftfahrzeuggeschwindigkeit. Dabei ist es vorteilhaft, wenn der Wert der genannten Parameter jeweils in einem vorgegebenen Bereich über einen vorgegebenen Zeitraum liegen muss, damit die bestimmten Bedingungen erfüllt sind. Bevorzugt ist der Bereich des Drehmomentes +/- 2Nm. Der Bereich des Lenkwinkels ist vorzugsweise +/- 10° gegenüber der Geradeausstellung. Die tiefpassgefilterte Lenkwinkelgeschwindigkeit liegt bevorzugt zwischen 0 und 5°/s, wobei vorzugsweise ein Butterworth Tiefpassfilter erster Ordnung mit einer Grenzfrequenz von 5Hz verwendet wird. Die Kraftfahrzeuggeschwindigkeit beträgt bevorzugt zwischen 30 km/h und 100 km/h.

Die Analyse und statistische Auswertung des Histogramms umfasst bevorzugt eine Bestimmung von Position und Breite von Peaks. Für den Fall, dass bei der Analyse und statistischen Auswertung des Histogramms zwei Peaks erkannt werden, gibt der Abstand der beiden Peaks einen Hysteresewert zur Quantifizierung der Hysterese und eine Mitte zwischen den beiden Peaks einen Offsetwert zur Quantifizierung des Offsets wieder.

Für den Fall, dass bei der Analyse und statistischen Auswertung des Histogramms ein einziger Peak erkannt wird, bestimmt der Erwartungswert des Peaks bevorzugt einen Offsetwert und die Standardabweichung des Peaks einen Hysteresewert.

Vor der Verwendung der Werte zur Anpassung des Drehmomentwertes, werden der Hysteresewert und der Offsetwert bevorzugt gefiltert und lediglich beim Vorliegen einer Abweichung aktualisiert, so können schnelle Änderungen der Werte vermieden werden. Der Filter ist vorzugsweise ein "Fast Moving Average"-Filter oder ein "Exponential Moving Average"-Filter.

Vor der weiteren Verwendung des gemessenen Drehmomentes wird der gemessene Drehmomentwert mittels des Hysteresewertes und des Offsetwertes vorzugsweise angepasst und somit die Genauigkeit der Messung verbessert.

Weiterhin ist eine elektromechanische Kraftfahrzeuglenkung mit einer an einer Lenkwelle angeordneten Lenksäulendrehmomentsensoreinheit und einer Steuereinheit vorgesehen, wobei die Steuereinheit dazu eingerichtet ist, dass zuvor beschriebene Verfahren auszuführen.

Nachfolgend wird ein Ausführungsbeispiel der vorliegenden Erfindung anhand der Zeichnungen beschrieben. Gleiche Bauteile oder Bauteile mit gleichen Funktionen tragen gleiche Bezugszeichen. Es zeigen:

Figur 1: eine räumliche Darstellung einer elektromechanischen Hilfskraftlenkung eines Kraftfahrzeuges,

Figur 2: einen zeitlichen Verlauf eines von einer Drehmomentsensoreinheit gemessenen Drehmomentes,

Figur 3: ein erstes Histogramm der Drehmomentwerte, sowie

Figur 4: ein zweites Histogramm der Drehmomentwerte.

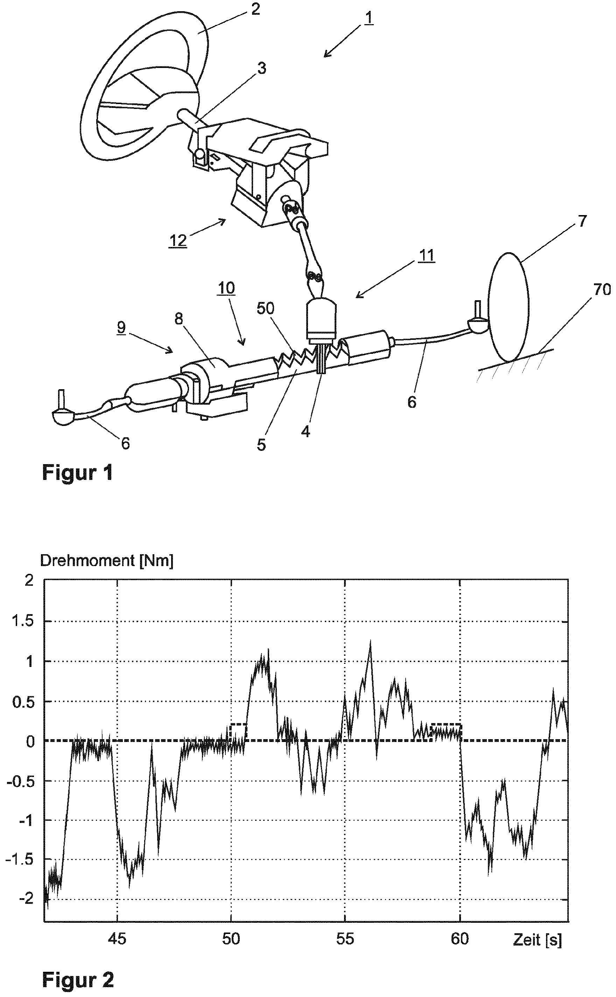

In der Figur 1 ist eine elektromechanische Kraftfahrzeugservolenkung 1 mit einem Lenkrad 2, das mit einer Lenkwelle 3 drehfest gekoppelt ist, schematisch dargestellt. Über das Lenkrad 2 bringt der Fahrer ein entsprechendes Drehmoment als Lenkbefehl in die Lenkwelle 3 ein. Das Drehmoment wird dann über die Lenkwelle 3 auf ein Lenkritzel 4 übertragen. Das Ritzel 4 kämmt in bekannter Weise mit einem Zahnsegment 50 einer Zahnstange 5. Das Lenkritzel 4 bildet zusammen mit der Zahnstange 5 ein Lenkgetriebe. Die Zahnstange 5 ist in einem Lenkungsgehäuse in Richtung ihrer Längsachse verschieblich gelagert. An ihrem freien Ende ist die Zahnstange 5 mit Spurstangen 6 über nicht dargestellte Kugelgelenke verbunden. Die Spurstangen 6 selbst sind in bekannter Weise über Achsschenkel mit je einem gelenkten Rad 7 des Kraftfahrzeugs verbunden. Eine Drehung des Lenkrades 2 führt über die Verbindung der Lenkwelle 3 und des Ritzels 4 zu einer Längsverschiebung der Zahnstange 5 und damit zu einer Verschwenkung der gelenkten Räder 7. Die gelenkten Räder 7 erfahren über eine Fahrbahn 70 eine Rückwirkung, die der Lenkbewegung entgegenwirkt. Zum Verschwenken der Räder 7 ist folglich eine Kraft erforderlich, die ein entsprechendes Drehmoment am Lenkrad 2 erforderlich macht. Ein Elektromotor 8 einer Servoeinheit 9 ist vorgesehen, um dem Fahrer bei dieser Lenkbewegung zu unterstützen. Die Servoeinheit 9 kann dabei als Hilfskraftunterstützungseinrichtung 10,11,12 entweder mit einer Lenkwelle 3, dem Lenkritzel 4 oder der Zahnstange 5 gekoppelt sein. Die jeweilige Hilfskraftunterstützung 10,11,12 trägt ein Hilfskraftmoment in die Lenkwelle 3, das Lenkritzel 4 und/oder in die Zahnstange 5 ein, wodurch der Fahrer bei der Lenkarbeit unterstützt wird. Die drei unterschiedlichen in Figur 1 dargestellten Hilfskraftunterstützungen 10,11,12 zeigen alternative Positionen für deren Anordnung. Üblicherweise ist nur eine einzige der gezeigten Positionen mit einer Hilfskraftunterstützung belegt. Die Servoeinheit kann dabei als Überlagerungslenkung an der Lenksäule oder als Hilfskraftunterstützungseinrichtung an dem Ritzel 4 oder der Zahnstange 5 angeordnet sein. Eine nicht dargestellte Drehmomentsensoreinheit erfasst die Verdrehung einer oberen Lenkwelle gegenüber einer unteren Lenkwelle als ein Maß des an der oberen Lenkwelle bzw. dem Lenkrad manuell ausgeübten Drehmomentes. Die obere Lenkwelle und die untere Lenkwelle sind drehelastisch über einen Drehstab miteinander gekoppelt. Die Drehmomentsensoreinheit weist einen drehfest mit der oberen Lenkwelle verbunden Ringmagneten (Permanentmagneten) und einen mit der unteren Lenkwelle verbundenen Stator auf. Eine dazugehörige Sensoreinheit ist raumfest in einem Getriebedeckel der an der Lenkwelle angeordneten Hilfskraftunterstützung gehalten. In Abhängigkeit des von der Drehmomentsensoreinheit gemessen Drehmoments stellt die Servoeinheit der Hilfskraftunterstützung eine Lenkunterstützung für den Fahrer bereit. Anstelle des gemessenen Drehmomentes kann auch vorgesehen sein, dass das Drehmoment geschätzt wird.

Um die Genauigkeit der Bestimmung des Drehmomentes zu verbessern, werden die gemessenen Drehmomentwerte zusammengetragen und statistisch ausgewertet. Die Reibung in der Lenksäule führt zu einem Hystereseverhalten des ermittelten Drehmomentes gegenüber dem tatsächlich in das Lenkrad eingeleiteten Drehmoment. Die Asymmetrien im Lenksystem führen hingegen zu einem Offset zwischen dem ermittelten Drehmoment und dem tatsächlich in das Lenkrad eingeleiteten Drehmoment. Eine statistische Auswertung der gemessenen Drehmomentwerte ermöglicht es die Primärreibung und Asymmetrie des Systems in Form von Hysterese und Offset zu quantifizieren. Die Messwerte der Drehmomentsensoreinheit werden dann, um die Genauigkeit zu verbessern, für die weitere Verarbeitung des Drehmomentes entsprechend angepasst.

Die Drehmomentwerte werden unter bestimmten Randbedingungen in ein Histogramm eingetragen. Der Verlauf der im Histogramm dargestellten Häufigkeitsverteilung wird statistisch analysiert und die Hysterese und der Offset bestimmt. Eine Aktualisierung der Werte der Hysterese und des Offsets ist reguliert, um schnelle Änderungen zu vermeiden.

Im Detail umfasst das Verfahren die folgenden Schritte. Das Drehmoment wird mittels der Drehmomenteinheit gemessen. Die gemessenen Werte werden Tiefpass gefiltert. Die tiefpassgefilterten Drehmomentwerte, der am Lenkrad anliegende Lenkwinkel, eine tiefpassgefilterte Lenkwinkelgeschwindigkeit, und die Fahrzeuggeschwindigkeit werden analysiert. Liegen diese Werte für eine vorgegebene Zeitspanne in einen jeweils vorbestimmten Bereich, erfolgt die Aufnahme der tiefpassgefilterten Drehmomentwerte in das Histogramm. Bevorzugt ist der Bereich des Drehmomentes +/- 2Nm. Der Bereich des Lenkwinkels ist vorzugsweise +/- 10° gegenüber der Geradeausstellung. Die tiefpassgefilterte Lenkwinkelgeschwindigkeit liegt bevorzugt zwischen 0 und 5°/s, wobei vorzugsweise ein Butterworth-Tiefpassfilter erster Ordnung mit einer Grenzfrequenz von 5Hz verwendet wird. Die Kraftfahrzeuggeschwindigkeit beträgt bevorzugt zwischen 30 km/h und 100 km/h.

Figur 2 zeigt einen zeitlichen Verlauf des gemessenen Drehmomentes. Die gestrichelte Linie stellt die Zeitfenster dar, in denen die Werte ins Histogramm eingetragen werden und die zuvor genannten Bedingungen erfüllt sind. Beträgt der Wert der X-Achse Null, so werden die Drehmomentwerte für die Auswertung verworfen. Bei einem Wert ungleich Null erfolgt der Eintrag im Histogramm. Nachdem genügend Werte in das Histogramm eingetragen wurden, wird die Häufigkeitsverteilung analysiert.

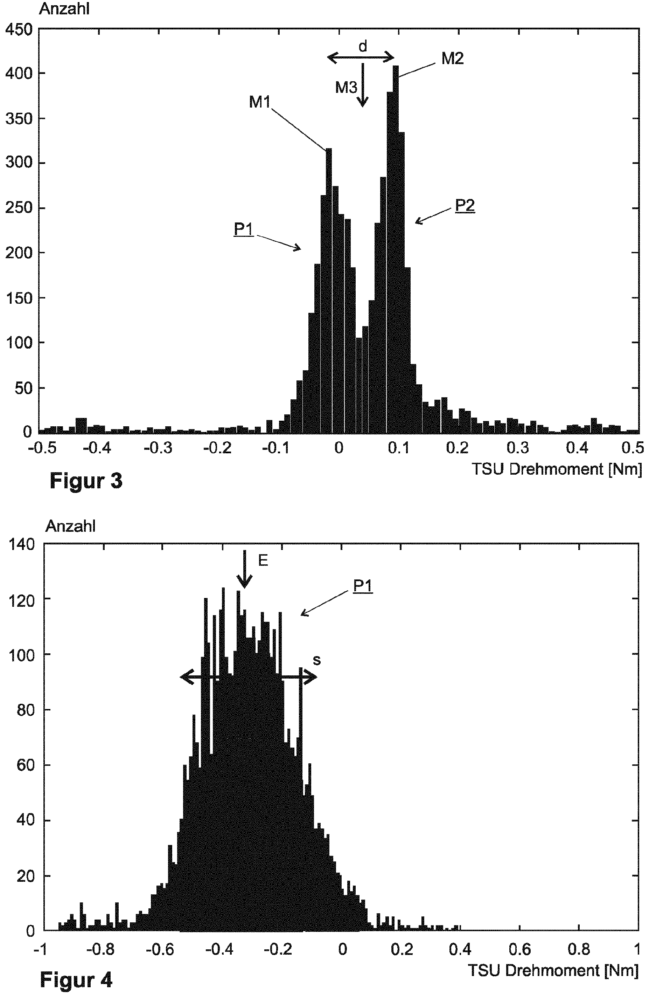

Die Figuren 3 und 4 zeigen exemplarisch zwei unterschiedliche Häufigkeitsverteilungen, die zwei verschiedenen Kraftfahrzeugen zuzuordnen sind und unter unterschiedlichen Straßenbedingungen entstanden sind.

In Figur 3 sind die Bedingungen für das Verfahren ideal. Das Lenksystem und die Kraftfahrzeugkarosserie sind weder zu steif noch zu weich und die Straßenbedingungen sind gut. Die Verteilung zeigt unter diesen Bedingungen zwei Peaks P1,P2 mit lokalen Maxima M1,M2, die voneinander beabstandet sind. Der Abstand d zwischen den Maxima M1,M2 gibt dabei die Hysterese und die Mitte M3 zwischen den beiden Maxima M1,M2 auf der x-Achse den Offset wieder.

Figur 4 zeigt hingegen den Normalfall. Es kommt zu Vibrationen in der Lenksäule und dem Lenkrad, die zu einer größeren Verteilung der Drehmomentwerte aufgrund des Trägheitsmoments des Lenkrads führen. Die Verteilung weist lediglich einen einzelnen Peak P1 auf. Der Erwartungswert E[X] gibt den Offset und die Standardabweichung s die Hysterese des Systems wieder. Dabei gelten folgende Zusammenhänge:

$$s = \sqrt{\frac{1}{N-1} \sum_{i=1}^{N} (x_i - \overline{x})^2}\ ,$$

und

$$E[X] = \sum_{i=1}^{k} x_i\, p_i = x_1 p_1 + x_2 p_2 + \ldots + x_k p_k\ .$$

Die Werte der Hysterese s,d und des Offsets E,M3 werden gefiltert und nur aktualisiert, wenn der gefilterte Wert sich ändert. Dafür kann beispielsweise ein "Fast Moving Average"- Filter oder ein "Exponential Moving Average"- Filter verwendet werden.

Die Werte s,d,E,M3 werden dann verwendet, um den gemessenen oder geschätzten Drehmomentwert anzupassen und dessen Genauigkeit zu verbessern.

**Patentansprüche**

1. Verfahren zur Bestimmung von Hysterese und Offset einer Lenksäulendrehmomentbestimmung einer elektromechanischen Hilfskraftlenkung (1) eines Kraftfahrzeuges mit folgendem Schritt:

   • Messen oder Schätzen eines in ein Lenkrad (2) eingeleiteten Drehmomentes mittels einer Lenksäulendrehmomentsensoreinheit, **dadurch gekennzeichnet, dass** das Verfahren folgende weitere Schritte umfasst:

   • Eintragen von unter bestimmten Bedingungen gemessener oder geschätzter Drehmomentwerte in ein Histogramm,
   • Analyse und statistische Auswertung des Histogramms und Bestimmen der Hysterese und des Offsets in Form eines Hysteresewertes (s,d) und eines Offsetwertes (E,M3).

2. Verfahren nach Anspruch 1, **dadurch gekennzeichnet, dass** die Bedingungen das gemessene Drehmoment, einen Lenkwinkel, eine tiefpassgefilterte Lenkwinkelgeschwindigkeit und eine Kraftfahrzeuggeschwindigkeit umfassen.

3. Verfahren nach Anspruch 2, **dadurch gekennzeichnet, dass** der Wert der genannten Parameter jeweils in einem vorgegebenen Bereich über einen vorgegebenen Zeitraum liegt, damit die bestimmten Bedingungen erfüllt sind.

4. Verfahren nach einem der vorhergehenden Ansprüche, **dadurch gekennzeichnet, dass** die Analyse und statistische Auswertung des Histogramms eine Bestimmung von Position und Breite von Peaks (M1,M2) umfasst.

5. Verfahren nach Anspruch 4, **dadurch gekennzeichnet, dass** für den Fall, dass bei der Analyse und statistischen Auswertung des Histogramms zwei Peaks (M1,M2) erkannt werden, der Abstand (d) der beiden Peaks (M1,M2) einen Hysteresewert zur Quantifizierung der Hysterese und eine Mitte (M3) zwischen den beiden Peaks (M1,M2) einen Offsetwert zur Quantifizierung des Offsets widergibt.

6. Verfahren nach Anspruch 4, **dadurch gekennzeichnet, dass** für den Fall, dass bei der Analyse und statistischen Auswertung des Histogramms ein einziger Peak (M1) erkannt wird, der Erwartungswert des Peaks (E) einen Offsetwert und die Standardabweichung (s) des Peaks einen Hysteresewert bestimmt.

7. Verfahren nach einem der vorhergehenden Ansprüche, **dadurch gekennzeichnet, dass** der Hysteresewert (s,d) und der Offsetwert (E,M3) gefiltert werden und lediglich beim Vorliegen einer Abweichung aktualisiert werden.

8. Verfahren nach Anspruch 7, **dadurch gekennzeichnet, dass** der Filter ein "Fast Moving Average"-Filter oder ein "Exponential Moving Average"-Filter ist.

9. Verfahren nach einem der vorhergehenden Ansprüche, **dadurch gekennzeichnet, dass** vor der weiteren Verwendung des gemessenen Drehmomentes der gemessene Drehmomentwert mittels des Hysteresewertes (s,d) und des Offsetwertes (E,M3) angepasst wird.

10. Elektromechanische Kraftfahrzeuglenkung (1) mit einer an einer Lenkwelle (2) angeordneten Lenksäulendrehmomentsensoreinheit und einer Steuereinheit, die dazu eingerichtet ist, das Verfahren nach einem der Ansprüche 1 bis 9 auszuführen.

**Claims**

1. Method for determining the hysteresis and offset of a steering column torque determination of an electromechanical power-assisted steering system (1) of a motor vehicle, comprising the following step:

   • Measuring or estimating a torque introduced into a steering wheel (2) by means of a steering column torque sensor unit,
   **characterized in that** the method comprises the following further steps:

      • Entering torque values measured or estimated under certain conditions in a histogram,
      • Analysis and statistical evaluation of the histogram and determination of the hysteresis and offset in the form of a hysteresis value (s,d) and an offset value (E,M3).

2. The method according to claim 1, **characterized in that** the conditions comprise the measured torque, a steering angle, a low-pass filtered steering-angle velocity and a motor vehicle speed.

3. The method according to claim 2, **characterized in that** the value of said parameters is within a predetermined range over a predetermined period of time so that the specified conditions are met.

4. Method according to one of the preceding claims, **characterized in that** the analysis and statistical evaluation of the histogram comprises a determination of the position and width of peaks (M1, M2).

5. Method according to claim 4, **characterized in that**, in the event that two peaks (M1, M2) are detected during the analysis and statistical evaluation of the histogram, the distance (d) between the two peaks (M1, M2) reflects a hysteresis value for quantifying the hysteresis and a middle (M3) between the two peaks (M1, M2) reflects an offset value for quantifying the offset.

6. Method according to claim 4, **characterized in that**, in the event that a single peak (M1) is detected during the analysis and statistical evaluation of the histogram, the expected value of the peak (E) determines an offset value and the standard deviation (s) of the peak determines a hysteresis value.

7. Method according to one of the preceding claims, **characterized in that** the hysteresis value (s,d) and the offset value (E,M3) are filtered and are only updated if there is a deviation.

8. Method according to claim 7, **characterized in that** the filter is a "Fast Moving Average" filter or an "Exponential Moving Average" filter.

9. Method according to one of the preceding claims, **characterized in that**, before the measured torque is further used, the measured torque value is adjusted by means of the hysteresis value (s,d) and the offset value (E,M3).

10. Electromechanical motor vehicle steering system (1) having a steering column torque sensor unit arranged on a steering shaft (2) and a control unit which is set up to carry out the method according to one of claims 1 to 9.

**Revendications**

1. Procédé de détermination de l'hystérésis et du décalage d'une détermination du couple de la colonne de direction d'une direction assistée électromécanique (1) d'un véhicule automobile, comprenant l'étape suivante :

   • mesurer ou estimer au moyen d'une unité de capteur de couple de colonne de direction, un couple appliqué au volant de direction (2)
   **caractérisé en ce que** le procédé comprend les étapes supplémentaires suivantes :

      • Inscription dans un histogramme des valeurs de couple mesurées ou estimées dans certaines conditions,
      • Analyse et évaluation statistique de l'histogramme et détermination de l'hystérésis et du décalage sous la forme d'une valeur d'hystérésis (s,d) et d'une valeur de décalage (E,M3).

2. Procédé selon la revendication 1, **caractérisé en ce que** les conditions comprennent le couple mesuré, un angle de braquage, une vitesse angulaire de braquage filtrée par filtre passe-bas et une vitesse du véhicule.

3. Procédé selon la revendication 2, **caractérisé en ce que** la valeur desdits paramètres se situe respectivement dans une plage prédéterminée sur une période prédéterminée pour que les conditions déterminées soient remplies.

4. Procédé selon l'une quelconque des revendications précédentes, **caractérisé en ce que** l'analyse et l'évaluation statistique de l'histogramme comprennent une détermination de la position et de la largeur des pics (M1, M2).

5. Procédé selon la revendication 4, **caractérisé en ce que**, dans le cas où deux pics (M1, M2) sont détectés lors de l'analyse et de l'exploitation statistique de l'histogramme, la distance (d) des deux pics (M1, M2) reflète une valeur d'hystérésis pour quantifier l'hystérésis et un milieu (M3) entre les deux pics (M1, M2) reflète une valeur de décalage pour quantifier le décalage.

6. Procédé selon la revendication 4, **caractérisé en ce que**, dans le cas où un seul pic (M1) est détecté lors de l'analyse et de l'évaluation statistique de l'histogramme, la valeur attendue du pic (E) détermine une valeur de décalage et l'écart-type (s) du pic détermine une valeur d'hystérésis.

7. Procédé selon l'une des revendications précédentes, **caractérisé en ce que** la valeur d'hystérésis (s,d) et la valeur de décalage (E,M3) sont filtrées et mises à jour uniquement en présence d'un écart.

8. Procédé selon la revendication 7, **caractérisé en ce que** le filtre est un filtre "Fast Moving Average" ou un filtre "Exponential Moving Average".

9. Procédé selon l'une quelconque des revendications précédentes, **caractérisé en ce que**, avant l'utilisation ultérieure du couple mesuré, la valeur de couple mesurée est ajustée au moyen de la valeur d'hystérésis (s,d) et de la valeur de décalage (E,M3).

10. Direction électromécanique de véhicule automobile (1) comprenant une unité de capteur de couple de colonne de direction disposée sur un arbre de direction (2) et une unité de commande adaptée pour mettre en œuvre le procédé selon l'une quelconque des revendications 1 à 9.

**Figur 1**

**Figur 2**

**Figur 3**

**Figur 4**

**IN DER BESCHREIBUNG AUFGEFÜHRTE DOKUMENTE**

**In der Beschreibung aufgeführte Patentdokumente**

- DE 10034135 C1